# EUROPEAN PATENT APPLICATION

(11) **EP 1 759 988 A2**
(43) Date of publication of application: **07.03.2007**
(21) Application number: 06380206.0
(22) Date of filing: 19.07.2006
(51) Int. Cl.: B64C 15/00, B64C 15/12, B64C 29/00, B64C 39/10

(54) **Lift and propulsion system for aircraft with vertical take-off and landing**

(30) Priority: 20.07.2005 ES 200501976; 09.02.2006 ES 200600407
(71) Applicant: Garcia Perez, Francisco Angel, E-04007 Almeria (ES); Munoz Saiz, Manuel, 04004 Almeria (ES)
(72) Inventor: Garcia Perez, Francisco Angel, E-04007 Almeria (ES); Munoz Saiz, Manuel, 04004 Almeria (ES)

(57) **Abstract**

Lifting and propulsion system for aircraft with vertical take-off and landing that consists of applying to the aircraft certain propeller engines and rotating lifting systems around the transversal shafts and near the centre of gravity, presenting pairs of stabilizing propellers, turbines or fans in counter-rotation activated by electrical motors on the tips of the wings, nose and stabilizers on the tail of the aircraft, the electrical motors are powered by batteries, supercondensators, high powered electrical generators activated by the engines and by special auxiliary power units.

## Description

FIELD OF THE INVENTION.- Lifting and propulsion system for aircraft.

STATE OF THE TECHNOLOGY.- Autogyros do not take-off vertically; helicopters move at low speeds; their rotors are dangerous and VTOL aircraft not very safe. This invention solves these problems.

DESCRIPTION OF THE INVENTION.- The lifting and propulsion system of the invention for aircraft with vertical take-off and landing consists of applying to the aircraft certain propeller engines and rotating lift systems around the transversal shafts and near the centre of gravity, presenting pairs of stabilising propellers, turbines or fans in counter-rotation activated by electrical motors on the tips of the wings, nose and/or stabilizers on the tail of the aircraft; the electrical motors are powered by batteries, supercondensators, high powered electrical generators activated by the engines and by special auxiliary power units.

Some electrical generators can be disconnected in the horizontal flight.

The electrically-operated propellers, turbines or stabilising fans stabilize the aircraft during vertical take-off; the ducts of the propellers, fanes, etc. are equipped with butterfly type eccentric valves, slats or hatches that open automatically during vertical movement and close on horizontal movement thanks to the action of the ram air and a spring. They can provide lift during horizontal and vertical flight and additional electrically-operated propellers or fanes can be installed on the rest of the surface of the wings or fuselage. Optionally, some revolving blades can be added around the edges of the cowl outlet of the turbines which are operated by means of hydraulic or pneumatic actuators to deflect the air and stabilize the aircraft.

The ducts can be vertical, tilted, elbows, nozzles, venturi, etc.

Each one of the propelling engine groups can use one or more gas turbines, mini-turbines, microturbines and nanoturbines in parallel which can be turbofans, turbopropellers, etc. While cruising, the nose can be tilted up so that part of the push is used for lift and the rest for propulsion. During vertical flight, these are used to provide suspension by means of the direct flow generated by the turbine, propeller fan, etc. and to move the special generators that power the electrical motors of the stabilizing propellers or fans.

Preferably, turbofan type gas turbines or miniturbines will be used. With one-half of the turbines, miniturbines, etc. or their fans turning in one direction and the other half in the opposite direction, it is possible to eliminate the torque that is created with current turbines. The turbines and fans can be fixed or can rotate around their transversal shafts or the aircraft's transversal shafts, using electric, pneumatic or hydraulic engines, actuators or drivers controlled manually by the pilot.

During horizontal flight, stability is obtained by means of the ailerons and depth and direction rudders located on the horizontal and vertical stabilizer. During vertical flight, horizontal stabilization is obtained using the pairs of electrically-actuated propellers or fans located on the winds and on both horizontal rudders on the nose of the aircraft. Gyroscopes detect the change in position with respect to the horizontal and direction, generating signals that act on the electrical engines that activate the horizontal and vertical stabilizing propellers and fans to correct any undesired deviations or tilting. The ones in counter-rotation and the pair of propellers on the vertical rudder control the direction; the engines turn in both direction and with two independent circuits that guarantee operation in the event of a failure.

The bottom of the fuselage, which is flat, provides support during the horizontal flight along with the wings.

The electrical motors can be powered by batteries, supercondensators, fuel cells, etc. for short periods of time, in emergencies, etc. and can be reserved exclusively for the initial climb on take-off or the final descent on landing; in this last case very little electricity is used. The generators can be used as complementary elements for greater safety but are not absolutely necessary. The electrical generators reinforce the power applied by the batteries and charge them during horizontal flight. On climb, additional electrical power can be added by means of electric wires or cables, which can be disconnected after ascending to a certain altitude, reserving the charged battery for a possible emergency.

The aircraft can be composed of two arrow wings, joined to the rear of the fuselage without a tail; the turbines are placed on the rear of the fuselage between the wings in the aircraft's centre of gravity; the wings act as horizontal stabilizers with the vertical stabilizers placed at the ends, with the direction stabilizing propellers or fans and rudders in turn placed on them. A variation of this embodiment does not use vertical stabilizers but rather a positive dihedral angle on the arrow wings so that the propellers or fans and the stabilizing rudders and elevators are common and act simultaneously in roll, pitch and direction.

In the event of an emergency it can land like a conventional aircraft and can also land on water using inflatable floats.

Special centrifugal fans or propellers can be used which, along with a divergent duct and/or flared, provide to the flow of air an axial and descendent centrifugal movement which is subsequently straightened by blades.

It can be adapted to all types of aircraft, delta wings, flying wings, etc.

Even one of the turbines shutting down does not cause a great deal of destabilisation and this can be corrected or counteracted satisfactorily with the fans and gyroscopic controls.

The lift can be increased using multiple fans distributed through all the horizontal surfaces, wings and stabilizers.

Advantages: Practical, safe, very simple, economical, provides optimum vertical flying, can be used for transport, fire protection, rescue operations and for landing on water.

### BRIEF DESCRIPTION OF THE DRAWINGS

Figure 1 shows a plant and schematic view of an embodiment of the aircraft of the invention.
Figure 2 shows a plant and schematic view of a variant of the aircraft with a different embodiment of the propelling turbines.
Figure 3 shows a perspective of the aircraft in figure 1.
Figures 4, 5, 5a and 6 are plant and schematic views of variant of the aircraft.
Figure 7 shows a side and schematic view of a turbine.
Figure 8 shows a plant schematic view of an aircraft (fly wing kind) variant of the invention.

### MORE DETAILED DESCRIPTION OF THE INVENTION

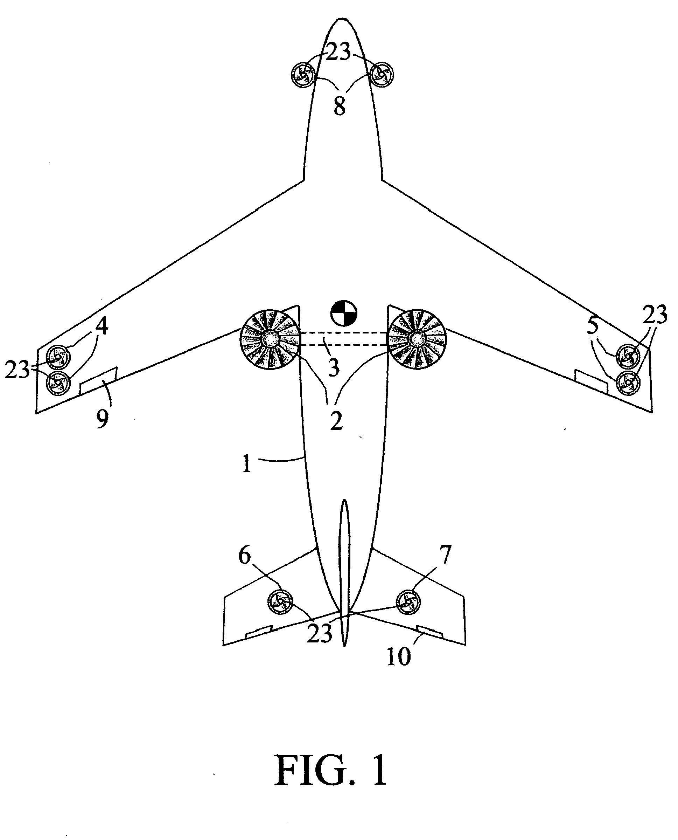

Figure 1 shows the fuselage (1), rotating, propelling and lifting turbines (2), interconnection shaft between the two (3), stabilizing fans on wing tips (4 and 5), on tail stabilizer (6 and 7) and on the nose (8), the latter being retractable and powered by electric motors (23), ailerons (9) and elevators (10). It shows the aircraft during vertical flight, stabilized by means of pairs of fans that can be propellers or turbines. The fans (6 and 7 or 8) may be optional.

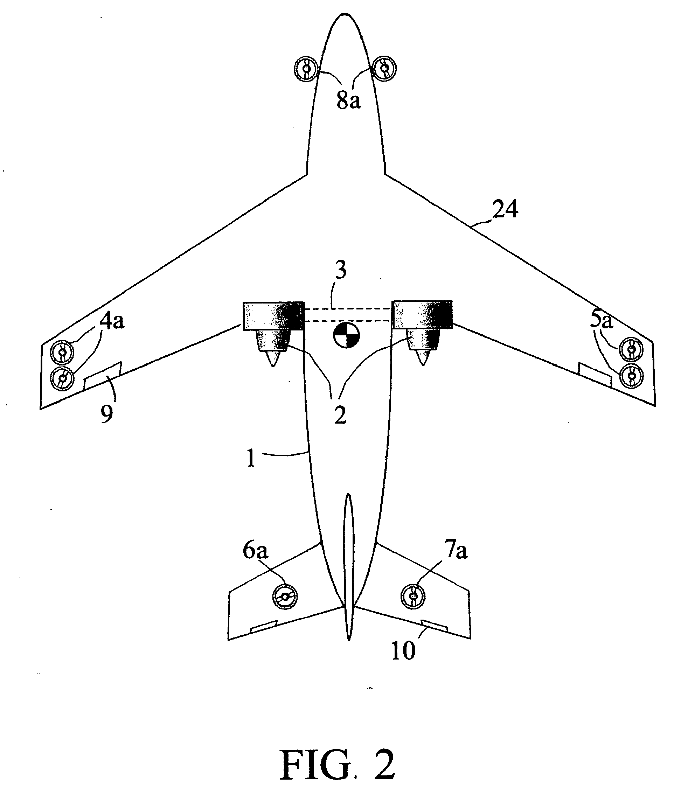

Figure 2 shows the fuselage (1), rotating, propelling and lifting turbines (2), interconnection shaft between the two (3), stabilizing propellers on wing tips (4a and 5a), stabilizers on the tail (6a and 7a) and the nose (8a) which are retractable, activated by electric motors, ailerons (9), elevators (10) and wings (24). Shows the turbines near the centre of gravity in horizontal flight.

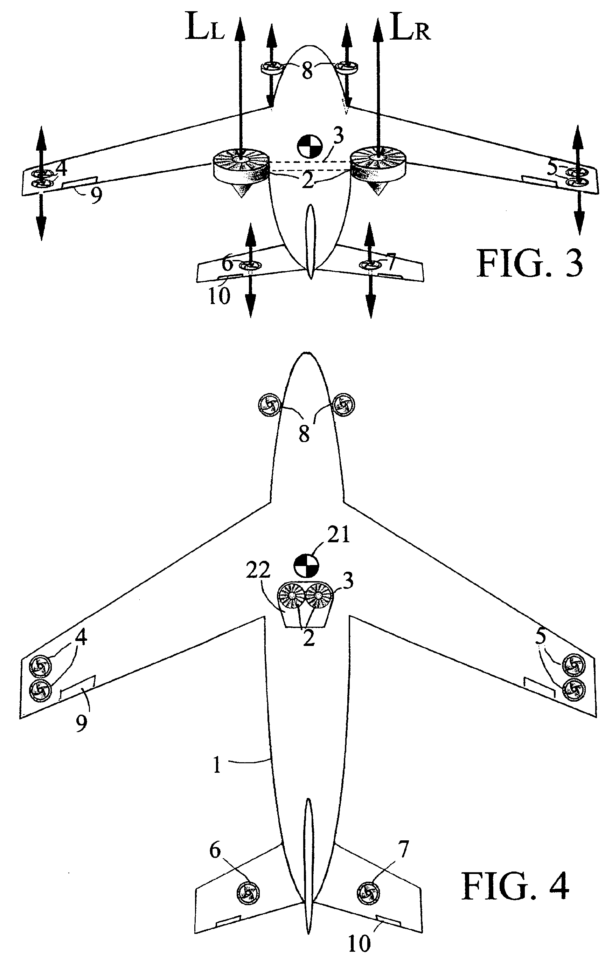

Figure 3 shows an aircraft with the rotating, propelling and suspending turbines (2), interconnection shaft between the two (3), stabilizing fans on wing tips (4 and 5), on tail stabilizer (6 and 7) and on the nose (8), which are retractable and powered by electric motors, ailerons (9) and elevators (10). It shows an aircraft with turbines close to the centre of gravity during vertical flight, stabilized by means of pairs of fans. The vectors (L_{L} and L_{R}) show the lift of the turbines; the rest of the vectors show the suspension of the fanes, which generate both in both directions depending on the needs at the time.

Figure 4 shows the fuselage (1), propeller turbines (2), interconnection shaft between the two (3), stabilizing fans on wing tips (4 and 5), on the tail (6 and 7) and on the nose (8), which are retractable and powered by electric motors, ailerons (9) elevators (10), centre of gravity (21) and vertical cavity for housing (22) the turbines. It shows an aircraft with the turbines in the centre of gravity in a housing in the centre of the fuselage, with the aircraft stabilized during vertical flight by means of pairs of fans. The fans can be propellers or turbines.

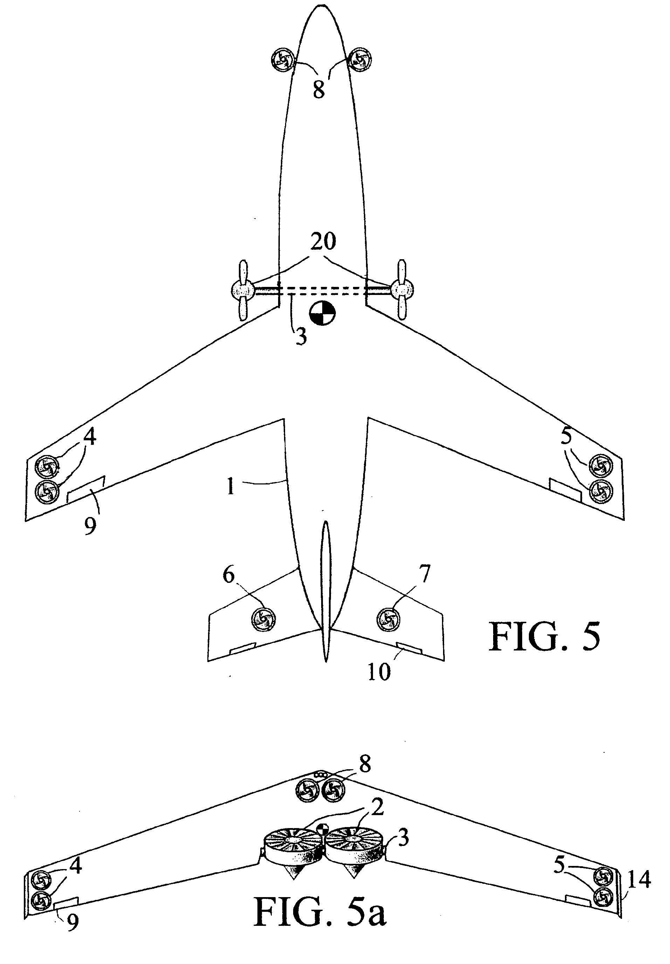

Figure 5 consists of fuselage (1), rotating, lifting and propelling turbopropellers (20), interconnection shaft between the two (3), stabilizing fanes on wing tips (4 and 5), wing stabilizer (6 and 7) and on the nose (8) which are retractable, activated by electric motors, ailerons (9) and elevators (10). It shows an aircraft with turbopropellers near the centre of gravity on the front part of the wings during vertical flight, stabilized by pairs of fans.

Figure 5a shows a flying wing with revolving, propelling and suspending turbines (2), interconnection shaft (3), stabilizing fans on wing tips (4 and 5), nose (8) and ailerons, ailerons (9) and vertical stabilizers (14).

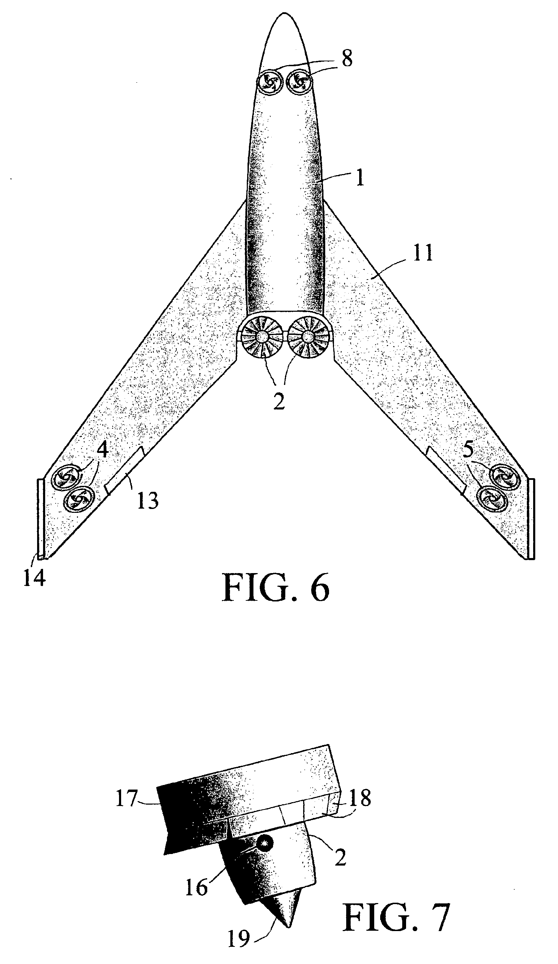

Figure 6 consists of the fuselage (1), rotating, propelling and lifting turbines (2), stabilizing fans on wing tips (4 and 5) and on the nose (8), sweep-back wings (11) ailerons, depth rudders (13) and vertical stabilizers (14), which carry the directions rudders and stabilizing fans but are not shown in the figure. It shows an aircraft with the turbines in the centre of gravity during vertical flight, with the aircraft stabilized during by means of pairs of fans. The fans can be propellers or turbines.

Figure 7 shows a turbine (2) that rotates around a shaft (16) and uses at the end of the cowl (17) straightening blades (18) rotating around the upper edge which are powered by hydraulic, pneumatic actuators deflecting the air to straighten the aircraft. The tail cone (19) can also be rotating

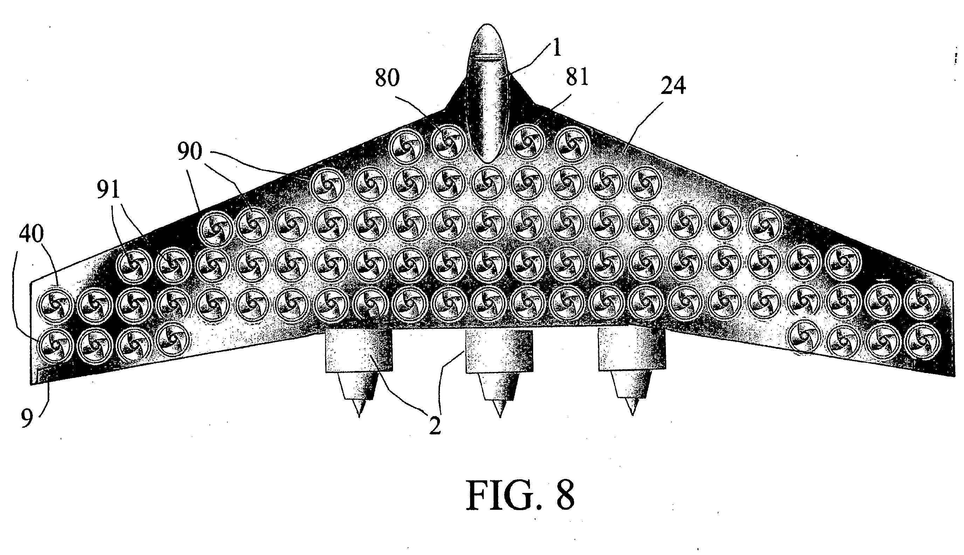

Figure 8 shows the cabin-fuselage (1), turbines (2), ailerons (9) that can be used like elevators and rudders, fly-wing (24), stabilizing electrical fans acted by electrical motors (40, 80 and 81), lifting fans (90 and 91).

Since the drawings show ground views, they do not show the direction rudders or the direction stabilizing fans or propellers used in them.

## Claims

1. A lifting and propulsion system for aircraft with vertical take-off and landing that consists of applying to the aircraft certain propeller engines and rotating lifting systems around the transversal shafts and near the centre of gravity, presenting pairs of stabilizing propellers, turbines or fans in counter-rotation activated by electrical motors on the tips of the wings, nose and stabilizers on the tail of the aircraft, the electrical motors are powered by batteries, supercondensators, high powered electrical generators activated by the engines and by special auxiliary power units.

2. A lifting and propulsion system according to claim 1, wherein the ducts of the propellers, fanes, etc. are equipped with butterfly type eccentric valves, slats or hatches that open automatically during vertical movement and close on horizontal movement thanks to the action of the ram air and a spring.

3. A lifting and propulsion system according to claim 1, wherein the propelling engine groups use one or more gas turbines, mini-turbines, microturbines and nanoturbines in parallel which are turbofans, turbopropellers, while cruising, the nose is tilted up so that part of the push is used for lifting and the rest for propulsion.

4. A lifting and propulsion system according to claim 1, wherein turbines, mini-turbines, etc. are turbofan kind and use an interconnection shaft between the two.

5. A lifting and propulsion system according to claim 1, wherein during horizontal flight, stability is obtained by means of the ailerons and depth and direction rudders located on the horizontal and vertical stabiliser, during vertical flight, horizontal stabilization is obtained using the pairs of electrically-actuated propellers or fans located on the winds and on both horizontal rudders on the nose of the aircraft, gyroscopes detect the change in position with respect to the horizontal and direction, generating signals that act on the electrical engines that activate the horizontal and vertical stabilizing propellers and fans to correct any undesired deviations or tilting.

6. A lifting and propulsion system according to claim 1, wherein a pair of turbines or propellers actuated by electrical motors on the vertical stabilizer control the course.

7. A lifting and propulsion system according to claim 1, wherein the propellers, turbines or fans actuated by electrical motors that control the stabilization are controlled with two independent circuits that guarantee operation in the event of a failure.

8. A lifting and propulsion system according to claim 1, wherein the bottom of the fuselage, which is flat, provides lift during the horizontal flight along with the wings.

9. A lifting and propulsion system according to claim 1, wherein the electric motors are powered by fuel cells.

10. A lifting and propulsion system according to claim 1, wherein on ascent, additional electrical power can be added by means of electrical wires or cables, which can be disconnected after ascending to a certain altitude.

11. A lifting and propulsion system according to claim 1, wherein are used inflatable floats to land on the water.

12. A lifting and propulsion system according to claim 1, wherein special centrifugal fans or propellers are used which, along with a divergent and flared duct, provide to the flow of air an axial and descendent centrifugal movement which is subsequently straightened by blades o vanes

13. A lifting and propulsion system according to claim 1, wherein the turbines are settled in front of the wings and close to the fuselage.

14. A lifting and propulsion system according to claim 1, wherein the turbines are settled at the rear of the wings and close to the fuselage.

15. A lifting and propulsion system according to claim 1, wherein there is a cavity in the center zone of the fuselage for housing the turbines.

16. A lifting and propulsion system according to claim 1, wherein the aircraft uses sweepback wings, link to the rear part of a tailless fuselage, with the turbines settled at the rear zone of said fuselage, between the wings and in the centre of gravity of the aircraft, wings act like horizontal stabilizers and on their tips are arranged the vertical stabilizers and on these the stabilizing propellers, turbines or fans that stabilize the direction, pitch and roll.

17. A lifting and propulsion system according to claim 16, wherein the sweepback wings adopts a positive dihedral angle, in such a way that, fans or turbines and stabilizing rudders and elevators are common and act simultaneous in roll, pitch and direction.

18. A lifting and propulsion system according to claim 1, wherein the propulsion engines are turboproppellers

19. A lifting and propulsion system according to claim 1, wherein are used special generators witch are disconnected in flight.

20. A lifting and propulsion system for aircraft with vertical take-off and landing that consists of applying to the aircraft certain propeller engines and rotating lifting systems around the transversal shafts and near the centre of gravity, multiple propellers, turbines or fans actuated electrically are distributed through all the horizontal surfaces, wings and stabilizers, pairs of these propellers, turbines or fans in counter-rotation act like stabilizers activated by electrical motors on the tips of the wings, nose and stabilizers on the tail of the aircraft, the electrical motors are powered by batteries, supercondensators, high powered electrical generators activated by the engines and by special auxiliary power units.
